Europäisches Patentamt

European Patent Office

Office européen des brevets

(11) Veröffentlichungsnummer: **0 282 922**
**B1**

(12) **EUROPÄISCHE PATENTSCHRIFT**

(45) Veröffentlichungstag der Patentschrift:
12.09.90

(51) Int. Cl.⁵: **B62D 53/04**

(21) Anmeldenummer: **88103875.6**

(22) Anmeldetag: **11.03.88**

(54) Lastzug mit einem einachsigen Lenkfahrzeug und mehrachsigem Lastanhänger.

(30) Priorität: **11.03.87 DE 3707848**

(43) Veröffentlichungstag der Anmeldung:
**21.09.88 Patentblatt 88/38**

(45) Bekanntmachung des Hinweises auf die Patenterteilung:
**12.09.90 Patentblatt 90/37**

(84) Benannte Vertragsstaaten:
**BE DE FR GB NL SE**

(56) Entgegenhaltungen:
**DE-A- 3 241 055**
**DE-C- 402 690**
**DE-C- 955 197**

(73) Patentinhaber: **GEROH GmbH, Mechanische Systeme, Fischergasse 182, D-8551 Waischenfeld(DE)**

(72) Erfinder: **Slavik, Jaro, Dipl.-Ing., Bahnhofstrasse 42, D-6250 Limburg 7(DE)**

(74) Vertreter: **Lorenzen, Knud, Dipl.-Chem. Dr., Morassistrasse 8, D-8000 München 5(DE)**

## Beschreibung

Die Erfindung betrifft einen Lastzug mit einem das Triebwerk umfassenden, einachsigen Lenkfahrzeug und einem hieran an zwei Punkten rechts und links der Längsachse und um eine Querachse kippbar an dem Anhängerdrehgestell angekoppelten Lastanhänger.

Bei einem gattungsgemäßen Lastzug nach der DE-PS 402 690 wird vorgeschlagen, eine besonders gestaltete Anhängekupplung zwischen dem Fahrgestell eines einachsigen Zugfahrzeuges und der drehbaren Achse eines zweiachsigen Anhängers anzuordnen. Die Anhängekupplung besteht dabei aus beiderseits der Längsachse starr am Zugfahrzeugfahrgestell angeordneten Kupplungsstangen, die sich nach hinten erstrecken und deren Enden mittels Zapfen zwischen Ansätzen auf der drehbaren Anhängerachse schwingbar verbunden sind. Insbesondere die Ausbildung dieser Ansätze am Achskörper erfordert einen Herstellungs- und Logistikaufwand, der unter wirtschaftlichen Gesichtspunkten nicht vertretbar ist.

Aus der DE-PS 701 310 ist ein Lastzug bekannt, bei dem eine einachsige Zugmaschine mit einem zweiachsigen Anhänger verbunden ist. Am Drehgestell des Anhängers ist in an sich bekannter Weise eine um eine Querachse schwenkbare Deichsel angeordnet. Das vordere Deichselende weist hinter der Zugöse einen kegelförmigen Dorn auf, der im Zusammenwirken mit einem entsprechend geformten Hülse der zugmaschinenseitigen Anhängekupplung eine starre Ankupplung ermöglicht. Abgesehen von der aufwendigen Bauart ist diese Anhängekupplung einer erhöhten Torsionsbelastung ausgesetzt, da betriebsbedingte Verdrehungen um die Längsachse der beiden Lastzugteile über die Anhängekupplung übertragen werden müssen.

In der deutschen Patentanmeldung M 28 558 II/63 c, bekanntgemacht am 27.12.1956 ist darüberhinaus ein Lastzug beschrieben, bei dem ein mehrachsiger Motorwagen, dessen Hinterräder von der Fahrbahn abgehoben werden können, auf einen mehrachsigen Anhänger über eine einzige, die Vorderräder des Anhängers lenkende Kupplungsstange aufgesattelt ist. Dabei ist auch vorgeschlagen zwischen Motorwagen und Anhänger eine abkoppelbare Kardanwelle zum Antrieb der Anhängervorderräder anzuordnen. Da die Querachse, um welche die Lastzugteile gegeneinander nicken können, nicht durch den Kupplungspunkt verläuft, sondern etwa in der Mitte einer deichselähnlichen Kupplungsstange angeordnet ist, muß diese im Kupplungspunkt in einer horizontalen Ebene festgelegt werden, wozu es eines besonderen baulichen Aufwandes bedarf.

Schließlich ist aus dem DE-GM 7 925 852 ein Lastzug bekannt, bei dem die Zuggabel eines zweiachsigen Anhängers über zwei Kupplungspunkte starr mit einem ebenfalls zweiachsigen Motorwagen verbunden ist. Entsprechend der technischen Lehre dieser Druckschrift ist dazu eine Zwangslenkung der Anhängervorderachse unter Verwendung von Gestängen, Scheren oder vorzugsweise von zwei übereinander angeordneten Kugeldrehkränzen unverzichtbar.

Der Erfindung lag die Aufgabe zugrunde, unter Verwendung des bei dem gattungsgemäßen Lastzug angewandten Kuppelprinzips eine einfache, wirtschaftliche und die Fahrsicherheit verbessernde Lösung vorzuschlagen.

Es wurde nun gefunden, daß entgegen der üblichen Auffassung, daß ein Zugfahrzeug nicht leichter als der Anhänger sein sollte, da sonst bei unterschiedlicher Beladung unterschiedliche Kräfte auf einen solchen vorbekannten Sattelauflieger ausgeübt werden, es durchaus möglich ist, einen auch bei unterschiedlicher Beladung sicher fahrenden Lastzug bereitzustellen.

Zur Lösung dieser Aufgabe dient der Lastzug der zuvor beschriebenen Gattung, der dadurch gekennzeichnet ist, daß die Ankoppelung zwischen Lenkfahrzeug und vorderer Lenkachse des Lastanhängers ohne Zwischenschaltung einer Zuggabel über am Rahmenende des als verwindbare Parallelzuggabel ausgebildeten hinteren Teils des Lenkfahrzeuges angeordnete Zugösen nach DIN 74054 oder Anhängerkupplungen nach DIN 74051, welche in passend hierzu am Drehgestell der vorderen Lenkachse angeordnete Anhängerkupplungen nach DIN 74051 bzw. Zugösen nach DIN 74054 eingreifen, erfolgt.

Der erfindungsgemäße Lastzug weist den Vorteil auf, daß der verhältnismäßig lange Rahmen des Lenkfahrzeuges und der dadurch bedingte lange Radstand zwischen der Lenkachse des Lenkfahrzeuges und der vorderen Lenkachse des Lastanhängers einen sicheren Geradeauslauf und ein sicheres Lenkverhalten des Lastanhängers ergeben, wobei die beispielsweise bei Sattelzügen auftretenden Kippmomente weitgehend vermieden werden. Weiterhin ist der Leiterrahmen des Lenkfahrzeugs von Hause aus sehr flexibel, so daß er sich vorzüglich als "Zugdeichsel" für den Lastzug eignet. Ein entscheidender Vorteil gegenüber einem gewöhnlichen Gliederzug liegt darin, daß beim erfindungsgemäßen Lastzug nur ein Drehpunkt vorhanden ist und eine ungeteilte Ladefläche vorliegt.

Bei dem erfindungsgemäßen Lastzug ist der hintere Teil des Lenkfahrzeugs als verwindbare Parallelzuggabel ausgebildet. Dies ist erforderlich, da sonst bei unebenen Straßen einzelne Räder der Lenkachse des Lenkfahrzeuges oder auch des Anhängers abheben könnten. Verwindbarkeit bedeutet hier eine Verwindbarkeit in Längsrichtung des Lenkfahrzeuges bzw. Lastzuges.

Gemäß einer bevorzugten Ausführungsform weist das Lenkfahrzeug wenigstens ein absenkbares Laufrad auf. Ein solches absenkbares Laufrad oder Stützrad ist vorteilhaft, wenn die Ankopplung zwischen Lenkfahrzeug und Lastanhänger aufgehoben wird, wobei in diesem Fall das Lenkfahrzeug selbständig manövierfähig ist.

Bei einer weiteren bevorzugten Ausführungsform, bei welcher die Achse des Lenkfahrzeuges nicht angetrieben ist, besitzt dieses absenkbare Laufrad des Lenkfahrzeuges einen Nebenantrieb, so daß es selbständig manövierfähig bleibt. Dieser Nebenantrieb kann über eine Kardanwelle oder über einen hydrostatischen Antrieb erfolgen. Das Stützrad ist üblicherweise nicht lenkbar. Statt nur einem Stützrad kann auch eine, wahlweise angetriebene, absenkbare Hilfsachse mit 2 Stützrädern vorgesehen sein.

Gemäß einer weiteren bevorzugten Ausführungsform befindet sich zwischen dem Lenkfahrzeug und dem Lastanhänger eine abkoppelbare Kardanwelle zum Antrieb der vorderen Lenkachse des Lastanhängers. Durch diese Ausführungsform wird, insbesondere beim Transport schwerer Lasten, eine bessere Verteilung der Kräfte von den einzelnen Rädern auf die Straße erreicht, da nicht nur die vorderen Räder des Lenkfahrzeuges als Antriebsräder dienen.

Gemäß einer weiteren bevorzugten Ausführungsform sind nur die Räder der vorderen Lenkachse des Lastanhängers mittels der abkoppelbaren Kardanwelle angetrieben. Diese Ausführungsform weist den Vorteil auf, daß ein gesondert und technisch aufwendiger Antrieb der lenkbaren Räder des Lenkfahrzeuges vermieden werden kann.

Gemäß einer weiteren bevorzugten Ausführungsform sind die Hinterachse oder die Hinterachsen des Lastanhängers mit einer durch die Stellung der vorderen Lenkachse gesteuerten Lenkeinrichtung ausgerüstet, so daß eine bessere Manövrierfähigkeit des Gesamtlastzuges gegeben ist. Eine solche Lenkung der Hinterräder ist an sich bekannt, siehe z.B. die DE-OS 33 19 191.

Das Lenkfahrzeug des erfindungsgemäßen Lastzuges ist einachsig. Hierbei kann es sich um eine übliche Lastwagenvorderachse handeln, die vom Motor angetrieben oder nichtangetrieben sein kann. Weiterhin umfaßt das Lenkfahrzeug das übliche Triebwerk, d.h. den Motor, das Getriebe und den Fahrerstand, d.h. es kann sich um den vorderen Teil eines üblichen Lastwagens oder Sattelzuges handeln.

Bei Abkoppelung des Lastanhängers von diesem Lenkfahrzeug wäre dieses nicht mehr selbständig fahrbereit, so daß vorteilhafterweise ein absenkbares Laufrad oder Stützrad vorgesehen wird, das gegebenenfalls einen Nebenantrieb aufweisen kann, wie bereits zuvor beschrieben.

Die Ankoppelung zwischen diesem einachsigen Lenkfahrzeug und dem Lastanhänger erfolgt über die vordere Lenkachse dieses Lastanhängers. Hierzu sind an dem Rahmenende des Lenkfahrzeuges rechts und links zur Längsachse des Lenkfahrzeuges, möglichst weit außen, jeweils eine Zugöse angeordnet, wobei es sich hier um übliche Zugösen nach der Norm DIN 74054 handeln kann. Alternativ können an dem Rahmenende bzw. dem Ende der Zuggabel aber auch Anhängerkupplungen, z. B. nach der Norm DIN 74 051 vorgesehen sein.

Bei dem mehrachsigen Lastanhänger, wobei mehrachsig das Vorhandensein von wenigstens zwei Achsen bedeutet, handelt es sich um einen im Prinzip normalen Anhänger mit Drehgestell und Drehkranz an der vorderen Achse, wobei jedoch die Zuggabel eines normalen Anhängers wegfällt. An möglichst niedrigen Punkten des Drehgestelles der vorderen Lenkachse des Lastanhängers sind entweder Anhängerkupplungen der zuvor beschriebenen Art oder Zugösen angeordnet, wobei die Höhen und Abstände der Zugösen bzw. Anhängerkupplungen an dem Lenkfahrzeug und an dem Lastanhänger so ausgewählt sind, daß ein einwandfreier Eingriff, der das Zusammenkoppeln von Lenkfahrzeug und Lastanhänger bewirkt, möglich ist.

Vorteilhafterweise sind an der Zuggabel die Zugösen und an der Lenkachse des Lastanhängers die Anhängerkupplungen angebracht.

Bei dem Ankoppeln des Anhängers an das Lenkfahrzeug über übliche Zugösen nach der zuvorgenannten Norm DIN 74 054 und Anhängerkupplungen nach der Norm DIN 74 051 muß sichergestellt sein, daß eine in der Senkrechten bewegliche Ankopplung zwischen Lenkfahrzeug und Lastanhänger erhalten wird, d. h. eine Vertikalbeweglichkeit, so daß beim Befahren von z. B. Kuppen mit dem erfindungsgemäßen Lastzug immer sichergestellt ist, daß sämtliche Achsen des Lastzuges auf der Straße aufliegen. Trotz dieser in der senkrechten kippbaren Anordnung und trotz des nur einachsigen Lenkfahrzeuges ist dennoch die Sicherheit beim Fahren eines erfindungsgemäßen Lastzuges gegeben.

Die vordere Lenkachse des Anhängers kann bei schweren Lastanhängern auch als Doppelachsaggregat, z.B. mit einem Abstand der Achsen unter 1,30 m, ausgebildet sein. Ebenso kann die Hinterachse des Lastanhängers eine Mehrfachachse sein, d.h. als Doppelachs-Aggregat oder Dreifachachs-Aggregat ausgebildet sein.

Bei einem Antrieb der vorderen Lenkachse des Lastanhängers kann dieser Antrieb sich selbstverständlich bei Einsatz einer abkoppelbaren Kardanwelle auch auf die beiden Achsen eines solchen Doppelachs-Aggregates erstrecken.

Bei lenkbarer Hinterachse bzw. lenkbaren Hinterrädern der Hinterachse des Lastanhängers müssen selbstverständlich sämtliche Räder im Falle von Mehrfachachs-Aggregaten lenkbar sein.

Die Erfindung wird anhand der Zeichnung näher erläutert; in der Zeichnung sind:

Fig. 1 eine Seitenansicht eines erfindungsgemäßen Lastzuges;
Fig. 2 eine Aufsicht von oben auf den Lastzug von Fig.1;
Fig. 3 eine Aufsicht entsprechend Fig. 2 mit lenkbarer Hinterachse.

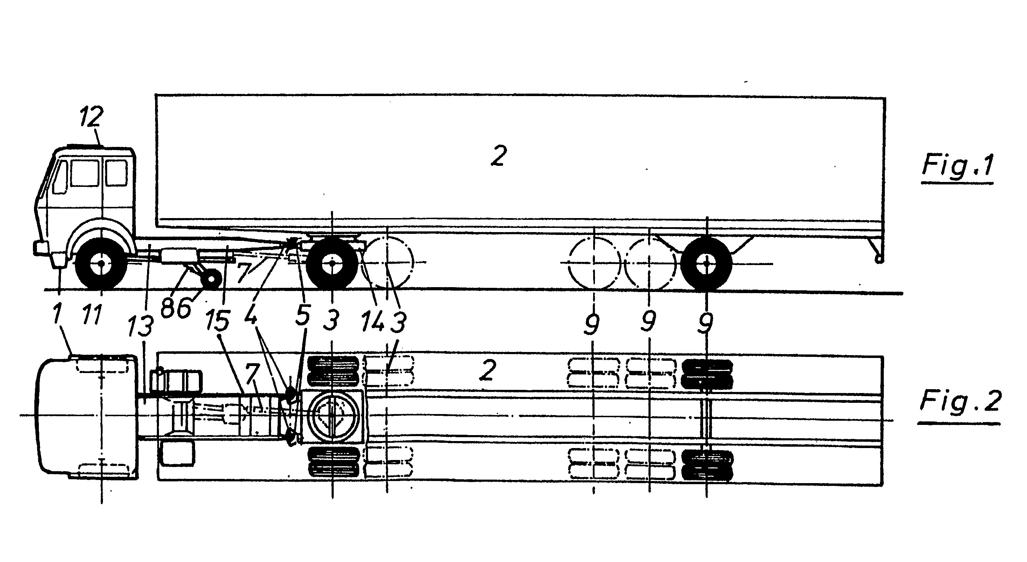

Bei den Fig. 1 und 2 ist das Lenkfahrzeug mit 1 bezeichnet. Dieses Lenkfahrzeug 1 umfaßt die Lenkachse 11, die Fahrerkabine 12 und den Rahmen 13. In den Fig. 1 bis 3 nicht dargestellt sind die weiteren üblichen Komponenten des Triebwerks wie Motor, Getriebe, Kompressor, usw..

Am Rahmen 13 des Lenkfahrzeuges 1, der üblicherweise eine größere Länge, z. B. von 2 bis 5 m, besitzt, ist der hintere Teil als verwindbare Parallelzuggabel 15 ausgebildet. An dieser Parallelzuggabel 15 befinden sich die beiden Zugösen 4, welche in Vertikalbeweglichkeit ermöglichende Anhängerkupplungen 5 am Drehgestell 14 des Lastanhängers 2 eingreifen, d. h. der vorderen Lenkachse 3 des Lastanhängers 2. Mit 7 ist der abkoppelbare Antrieb bezeichnet, hierbei kann es sich um einen hydrostatischen Antrieb oder um einen mechanischen Antrieb über eine gegebenenfalls abnehmbare Kardanwelle handeln.

Das absenkbare Laufrad des Lenkfahrzeuges 1 ist in Fig.1 mit 6 bezeichnet, wobei bei der gezeigten Darstellung dieses Laufrad 6 im abgesenkten Zustand vorliegt. Dieses Laufrad weist den Nebenantrieb 8 in Form einer kleinen Kardanwelle auf.

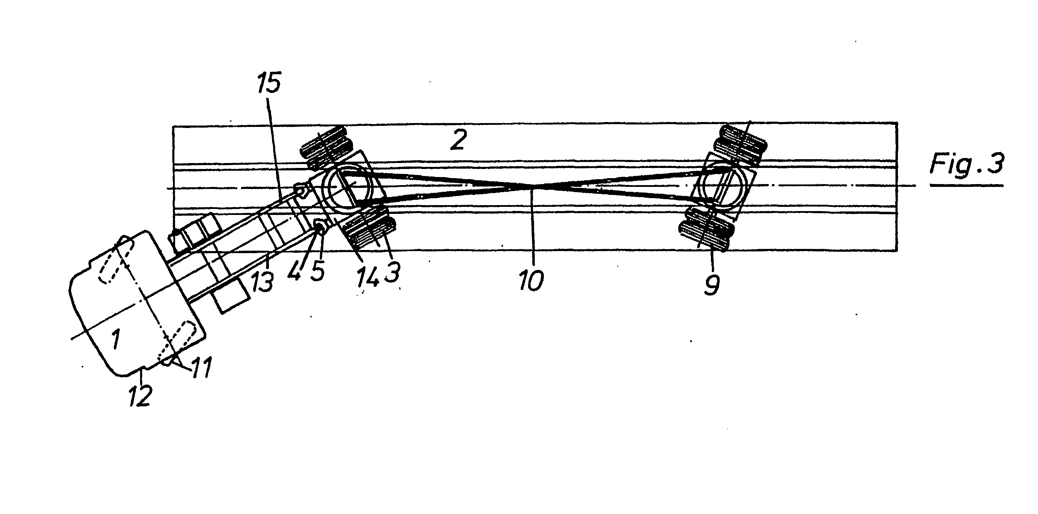

In der Fig. 3 ist die Ausführungsform dargestellt, bei welcher die Hinterachse 9 des Lastanhängers 2 mittels einer Lenkeinrichtung 10 versehen sind, wobei diese Lenkeinrichtung 10 durch die Stellung der vorderen Lenkachse 3 des Lastanhängers 2 gesteuert wird. Statt einer Lenkung der gesamten Hinterachse/n 9 des Lastanhängers 2 ist es selbstverständlich auch möglich, die einzelnen Räder der Hinterachse lenkbar auszugestalten.

## Patentansprüche

1. Lastzug mit einem das Triebwerk umfassenden, einachsigen Lenkfahrzeug (1) und einem hieran an zwei Punkten rechts und links der Längsachse und um eine Querachse kippbar an der Anhängervorderseite angekoppelten Lastanhänger (2), dadurch gekennzeichnet, daß die Ankoppelung zwischen Lenkfahrzeug (1) und vorderer Lenkachse (3) des Lastanhängers (2) ohne Zwischenschaltung einer Zuggabel über am Rahmenende des als verwindbare Parallelzuggabel (15) ausgebildeten hinteren Teils des Lenkfahrzeuges (1) angeordnete Zugösen (4) nach DIN 74054 oder Anhängerkupplungen nach DIN 74051, welche in passend hierzu am Drehgestell (14) der vorderen Lenkachse (3) angeordnete Anhängerkupplungen (5) nach DIN 74051 bzw. Zugösen (4) nach DIN 74054 eingreifen, erfolgt.

2. Lastzug nach Anspruch 1, dadurch gekennzeichnet, daß das Lenkfahrzeug (1) wenigstens ein absenkbares Laufrad (6) aufweist.

3. Lastzug nach einer der Ansprüche 1 oder 2, dadurch gekennzeichnet, daß die Lenkachse (11) des Lenkfahrzeuges (1) als Antriebsachse ausgebildet ist.

4. Lastzug nach einem der Ansprüche 1 bis 3, dadurch gekennzeichnet, daß zwischen Lenkfahrzeug (1) und Lastanhänger (2) ein abkoppelbarer Antrieb (7) zum Antrieb wenigstens der vorderen Lenkachse (3) des Lastanhängers (2) vorgesehen ist.

5. Lastzug nach Anspruch 4, dadurch gekennzeichnet, daß nur die vordere Lenkachse (3) des Lastanhängers (2) mittels des abkoppelbaren Antriebes (7) angetrieben ist.

6. Lastzug nach Anspruch 5, dadurch gekennzeichnet, daß das absenkbare Laufrad (6) des Lenkfahrzeuges (1) einen Nebenantrieb (8) aufweist.

7. Lastzug nach einem der Ansprüche 4 oder 5, dadurch gekennzeichnet, daß der abkoppelbare Antrieb (7) ein hydrostatischer Antrieb ist.

8. Lastzug nach einem der Ansprüche 4 oder 5, dadurch gekennzeichnet, daß der abkoppelbare Antrieb (7) eine Kardanwelle ist.

9. Lastzug nach einem der vorhergehenden Ansprüche, dadurch gekennzeichnet, daß die Hinterachse(n) (9) des Lastanhängers (2) mit einer durch die Stellung der vorderen Lenkachse (3) gesteuerten Lenkeinrichtung (10) ausgerüstet sind.

## Revendications

1. Train routier avec un véhicule directeur (1) à essieu unique, comprenant le moteur de propulsion, et avec une remorque porte-charges (2) accouplée à ce véhicule directeur, à l'avant de la remorque, en deux points à droite et à gauche de l'axe longitudinal et avec possibilité de basculement autour d'un axe transversal, caractérisé en ce que l'accouplement entre le véhicule directeur (1) et l'essieu directeur avant (3) de la remorque porte-charges (2) s'effectue, sans fourche d'attelage intermédiaire, au moyen d'anneaux de remorquage (4) selon DIN 74054 ou de dispositifs d'attelage selon DIN 74051, qui sont disposés à l'extrémité du châssis de la partie arrière du véhicule directeur (1) réalisée sous la forme d'une fourche d'attelage parallèle (15) flexible en torsion, et qui s'engagent dans des dispositifs d'attelage (5) selon DIN 74051 ou des anneaux de remorquage (4) selon DIN 74054, disposés sur le berceau orientable (14) de l'essieu directeur avant (3).

2. Train routier selon la revendication 1, caractérisé en ce que le véhicule directeur (1) comprend au moins un roue d'appui abaissable (6).

3. Train routier selon l'une des revendications 1 ou 2, caractérisé en ce que l'essieu directeur (11) du véhicule directeur (1) est réalisé sous forme d'essieu moteur.

4. Train routier selon l'une des revendications 1 à 3, caractérisé en ce qu'il est prévu entre le véhicule directeur (1) et la remorque porte-charges (2) un moyen d'entraînement désaccouplable (7), pour entraîner au moins l'essieu directeur avant (3) de la remorque porte-charges (2).

5. Train routier selon la revendication 4, caractérisé en ce que seul l'essieu directeur avant (3) de la remorque porte-charges (2) est entraîné par le moyen d'entraînement désaccouplable (7).

6. Train routier selon la revendication 5, caractérisé en ce que la roue d'appui abaissable (6) du véhicule directeur (1) possède un moyen d'entraînement auxiliaire (8).

7. Train routier selon l'une des revendications 4 ou 5, caractérisé en ce que le moyen d'entraînement désaccouplable (7) est un entraînement hydrostatique.

8. Train routier selon l'une des revendications 4 ou 5, caractérisé en ce que le moyen d'entraînement désaccouplable (7) est un arbre à cardan.

9. Train routier selon l'une des revendications précédentes, caractérisé en ce que le ou les essieux arrière (9) de la remorque porte-charges (2) est ou sont équipé(s) d'un mécanisme directeur (10) commandé par la position de l'essieu directeur avant (3).

## Claims

1. Road train including a uniaxial steering vehicle (1), which includes the power plant, and a load trailer (2) coupled thereto at the front side of the trailer at two points to the right and left of the longitudinal axis so as to be tiltable about a transverse axis, characterised in that the coupling between the steering vehicle (1) and the front steering axle (3) of the load trailer (2) is effected without the interposition of a towing coupling via loop traction eyes (4) in accordance with DIN 74054 arranged at the frame end of the rear portion of the steering vehicle (1) constructed as a torsional parallel towing coupling (15) or trailer couplings in accordance with DIN 74051 which engage in trailer couplings (5) in accordance with DIN 74051 or loop traction eyes (4) in accordance with DIN 74054 arranged appropriately on the bogie (14) of the front steering axial (2).

2. Road train is claimed in claim 1, characterised in that the steering vehicle (1) has at least one lowerable running wheel (6).

3. Road train as claimed in one of claims 1 or 2, characterised in that the steering axle (11) of the steering vehicle (1) is constructed as a drive axle.

4. Road train as claimed in one of claims 1 to 3, characterised in that provided between the steering vehicle (1) and load trailer (2) there is a decouplable drive (7) for driving at least the front steering axle (3) of the load trailer (2).

5. Road train as claimed in claim 4, characterised in that only the front steering axle (3) of the load trailer (2) is driven by means of the decouplable drive (7).

6. Road train as claimed in claim 5, characterised in that the lowerable running wheel (6) of the steering vehicle (1) has an auxiliary drive (8).

7. Road train as claimed in one of claims 4 or 5, characterised in that the decouplable drive (7) is a hydrostatic drive.

8. Road train as claimed in one of claims 4 or 5, characterised in that the decouplable drive (7) is a universal shaft.

9. Road train as claimed in one of the preceding claims, characterised in that the rear axle(s) (9) of the load trailer (2) are equipped with a steering device (10) controlled by the position of the front steering axle (3).

Fig.1

Fig.2

Fig. 3